# EUROPÄISCHE PATENTSCHRIFT

(11) **EP 1 986 940 B1**
(45) Veröffentlichungstag und Bekanntmachung des Hinweises auf die Patenterteilung: **11.07.2012**
(21) Anmeldenummer: 07702771.2
(22) Anmeldetag: 16.01.2007
(51) Int. Cl.: B65G 47/51, B65G 43/08

(54) **VORRICHTUNG ZUM SPEICHERN VON GEGENSTÄNDEN**
APPARATUS FOR STORING OBJECTS
DISPOSITIF POUR ACCUMUKER DES OBJETS

(30) Priorität: 20.02.2006 DE 102006008123
(43) Veröffentlichungstag der Anmeldung: 05.11.2008
(73) Patentinhaber: Krones AG, 93073 Neutraubling (DE)
(72) Erfinder: GIEHRL, Robert, 93109 Wiesent (DE); KOLLER, Jürgen, 93194 Walderbach (DE)
(74) Vertreter: Schuster, Thomas
(86) Internationale Anmeldenummer: PCT/EP2007/000305
(87) Internationale Veröffentlichungsnummer: WO 2007/096028

(56) Entgegenhaltungen:
- WO-A-00/43294
- WO-A-97/09257
- GB-A- 2 300 613

## Beschreibung

Die Erfindung betrifft eine Vorrichtung zum Speichern von Gegenständen gemäß dem Oberbegriff des Anspruchs 1.

Derartige Vorrichtungen sind in verschiedenen Ausführungen bekannt, wobei die beiden Förderbahnen jeweils ein eigenes Fördermittel (EP 581 143 B1, EP 1 161 391 B1) oder ein gemeinsames Fördermittel (EP 581 143 B1, WO 2005/073113 A2) in Form einer endlosen Förderkette oder dgl. aufweisen. Bei diesen bekannten Speichervorrichtungen muss die Überwachung der funktionsnotwendigen Elemente wie der Fördermittel einschließlich ihrer Anbauten, der Transfereinrichtung usw. sowie ggf. der transportierten Gegenstände im laufenden Betrieb rein visuell durch das Bedienungspersonal erfolgen. Da die zu überwachenden Elemente insbesondere bei Speichervorrichtungen hoher Kapazität mit entsprechend großen Abmessungen nur sehr schwer einzusehen und zu verfolgen sind, werden Beschädigungen und Fehlfunktionen, die zu schwerwiegenden Folgeschäden und Betriebsstörungen führen können, nicht immer rechtzeitig erkannt.

Eine vorrichtung gemäss dem oberbegriff des Anspruchs 1 ist aus der WO 00/43294 A bekannt. Anche vorrichtungen sind aus GB 2300613 A und WO 97/09257 A bekannt.

Der Erfindung liegt die Aufgabe zu Grunde, bei einer Speichervorrichtung der eingangs genannten Art die Erkennungsmöglichkeit von Beschädigungen und Störungen wesentlich zu verbessern.

Diese Aufgabe wird erfindungsgemäß durch die im Kennzeichen des Anspruchs 1 angegebenen Merkmale gelöst.

Bei einer erfindungsgemäßen Speichervorrichtung werden durch das mindestens eine Kontrollorgan evtl. auftretende Störungen und Beschädigungen sozusagen an Ort und Stelle direkt und ohne Verzögerung erfasst, ohne Zutun des Bedienungspersonals. Das Kontrollorgan kann die verschiedensten Überwachungsfunktionen an den Förderbahnen, an deren Fördermitteln, an der Transfereinrichtung selbst, an den Gegenständen usw. durchführen und kann dementsprechend alle gebräuchlichen Sensoren, Kameras usw. umfassen. Entsprechende Weiterbildungen der Erfindung sind in den Unteransprüchen angegeben.

Gemäss der Erfindung ist mindestens ein Kontrollorgan auf der Transfervorrichtung angeordnet und zusammen mit dieser verfahrbar. Dieses Kontrollorgan ist insbesondere dazu geeignet, um die Transferbewegung der Gegenstände und/oder - bei Speichervorrichtungen mit nur einer Förderkette oder dgl.- die Transferbewegung der Förderkette über die Transfereinrichtung zu kontrollieren.

Besonders vorteilhaft ist es auch, wenn gemäß einer Weiterbildung der Erfindung das Signal des Kontrollorgans auf eine stationäre Kontrollstation übertragen wird. Diese Kontrollstation kann in die Funktion der Speichervorrichtung eingreifen und diese beispielsweise selbsttätig stillsetzen und außerdem auf die verschiedenste Weise das Bedienungspersonal informieren und alarmieren. Dabei kann die Übertragung der Signale gemäß verschiedenen Weiterbildungen der Erfindung sowohl drahtlos als auch über stationäre Leitungen erfolgen ggf. unter Einschaltung von Relativbewegungen zulassenden Überträgern oder Schleifkontakten. Diese können gleichzeitig die Energieversorgung der beweglichen Kontrollorgane übernehmen.

Im Nachstehenden wird ein Ausführungsbeispiel der Erfindung anhand der Zeichnungen beschrieben. Es zeigen:
- Fig. 1: die perspektivische, schematische Darstellung einer Vorrichtung zum Speichern von Gegenständen mit zwei wendelförmigen Förderbahnen
- Fig. 2: die perspektivische Ansicht der Transfereinrichtung der Vorrichtung nach Fig. 1
- Fig. 3: die perspektivische Ansicht des Fördermittels der Vorrichtung nach Fig. 1 und 2
- Fig. 4: die perspektivische Ansicht eines Kettenglieds des Fördermittels nach Fig. 3
- Fig. 5: einen Ausschnitt der Transfereinrichtung nach Fig. 2.

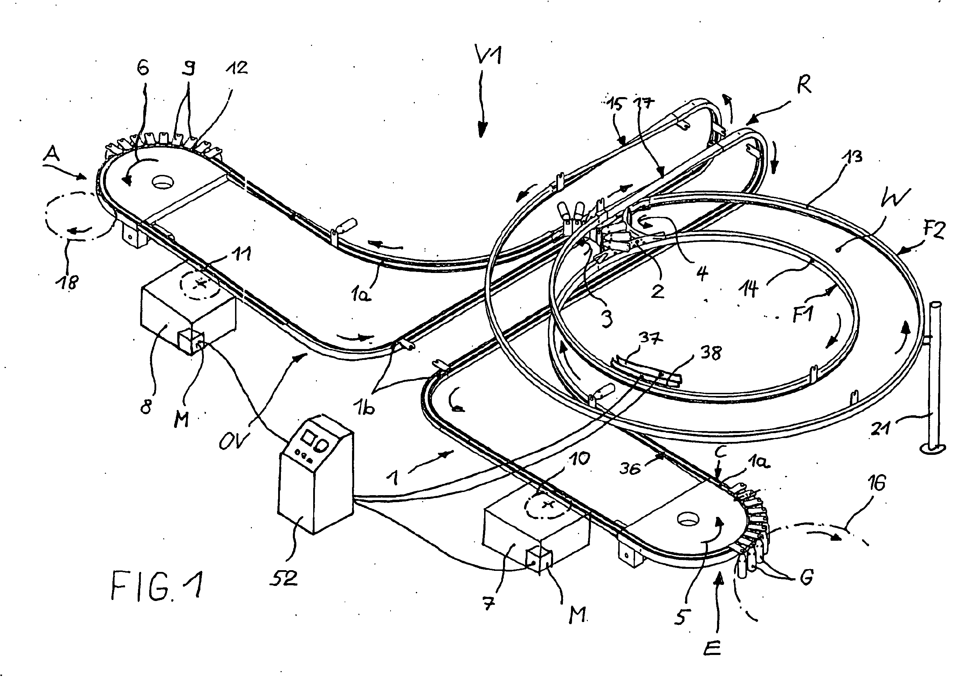

Der dynamische Speicher V₁ gemäß Fig. 1 bis 5 umfasst im Wesentlichen ein einziges endloses Fördermittel 1 in Form einer mit Greifern 9 bestückten Rollenkette 12, stationäre Führungsschienen 13, 14 für die Rollenkette, eine entlang den Führungsschienen 13, 14 verfahrbare Transfereinrichtung in Form eines Schlittens 2 mit einer ersten 180° Grad Umlenkung 3 und einer zweiten 180° Umlenkung 4 für die Rollenkette, eine Eingangsstation E mit einer dritten 180° Umlenkung 5 und einer ersten Antriebseinrichtung 7 sowie eine Ausgangsstation A mit einer vierten 180° Umlenkung 6 und einer zweiten Antriebsstation 8 für die Rollenkette 12.

Die Antriebsstationen 7, 8 weisen jeweils einen Motor M und ein von diesem über nicht gezeigte Getriebeelemente antreibbares Zahnrad 10, 11 auf, die in die Rollenkette 12 eingreifen. Im Bereich der Eingangsstation E werden die Gegenstände G in Form von PET-Flaschen z. B. durch den Auslaufstern 16 einer nicht weiter gezeigten Streckblasmaschine in die elastischen Greifer 9 eingeführt. Im Bereich der Ausgangsstation A werden die Gegenstände G z. B. durch den Einlaufstern 18 einer nicht weiter gezeigten Füll- und Verschließmaschine abgenommen.

Die dritte und vierte Umlenkung 5, 6 definieren zusammen mit den angeschlossenen parallelen, fluchtenden Strängen der Führungsschienen 13, 14 eine Art längliches Oval OV, das lediglich in der Mitte unterbrochen ist. An die Unterbrechungen schließen sich ein wendel- oder spiralförmiger Bereich W sowie eine vertikale Rückführung R für das Leertrum 1b der Rollenkette 12 an.

Im wendelförmigen Bereich W werden durch die Führungsschienen 13, 14 und das darauf laufende Fördertrum 1a und Leertrum 1b der Rollenkette 12 zwei konzentrische Förderbahnen F1 und F2 gebildet, zwischen denen die Gegenstände G durch die erste Umlenkung 3 des Schlittens 2 in Verbindung mit der Rollenkette 12 überführt werden.

Eine exakte seitliche Führung der Rollenkette 12 im Bereich der Umlenkungen 3, 4 ist von große Bedeutung für die Funktion des dynamischen Speichers V₁, da die Bewegung des Schlittens 2 allein durch die Zugkraft der Rollenkette 12 bewirkt wird: Verkürzt sich das Fördertrum 1a durch einen entsprechenden Geschwindigkeitsunterschied der Antriebsstationen 7 und 8, so bewegt sich der Schlitten 2 in Richtung Eingabestation E und Ausgabestation A. Verkürzt sich das Leertrum 1b auf Grund eines entsprechenden Geschwindigkeitsunterschieds der Antriebsstationen 7, 8, so fährt der Schlitten 2 von der Eingangsstation E und der Ausgangsstation A weg und vergrößert den Speicherinhalt.

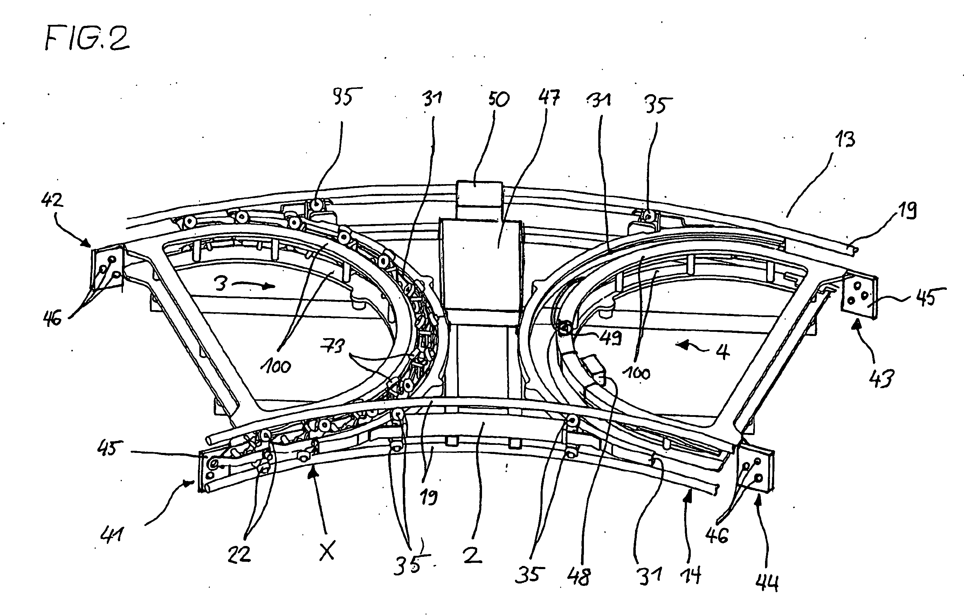

Der Bewegungsbereich des Schlittens 2 und damit der variable Bereich der Förderstrecke ist auf den spiraligen oder wendelförmigen Bereich W der Führungsschienen 13, 14 bzw. auf die Förderbahnen F1, F2 beschränkt, wo diese exakt parallel bzw. äquidistant und bogenförmig mit leichter Steigung verlaufen. Die dadurch definierte untere Endposition des Schlittens 2 mit minimaler Länge der Förderstrecke ist in Fig. 2 dargestellt. Die obere Endposition des Schlittens 2 mit maximaler Länge der Förderstrecke liegt genau darüber. Im Anschluss an die obere Endposition folgen zwei horizontale, parallele Verwindungsbereiche 15, 17 der Führungsschienen 13, 14 für das Leertrum 1b und im Anschluss daran vertikale Rückführungen R, die die Rollenkette 12 zurück in die durch die Umlenkungen 5 und 6 definierte normale Transportebene bzw. aus dieser heraus nach oben führen. Es schließen sich zwei weitere parallele, horizontale Bereiche der Führungsschienen 13, 14 an, die bis zur Vorderseite des Ovals OV führen und dann nach 90° Umlenkungen in die Eingangsstation E bzw. Ausgangsstation A einmünden. In Fig. 1 sind jeweils nur Teilbereiche der Rollenkette 12 mit den Greifern 9 dargestellt, in der Realität läuft die Rollenkette 12 über den gesamten dargestellten Bereich der Führungsschienen 13, 14 mit Ausnahme der beiden kurzen Stücke zwischen den Umlenkungen 3 und 4 des Schlittens 2. Dort haben die Laufrollen 35 des Schlittens 2 Platz.

In Fig. 1 ist aus Gründen der Übersichtlichkeit nur eine einzige Spirale oder Wendel dargestellt. In der Praxis wird man diesen variablen Speicherbereich in Form einer Mehrfachwendel mit senkrechter und/oder horizontaler Mittelachse gestalten um eine entsprechend hohe Pufferkapazität zu erreichen. Die Rückführungen R verlängern sich entsprechend.

Wie die Fig. 2 bis 5 zeigen, ist die äußere Führungsschiene 13 und die innere Führungsschiene 14 jeweils aus zwei parallelen Rundstangen 19 mit Abstandshaltern 20 aufgebaut, die in einem stationären Gestell 21 mit mehreren Säulen befestigt sind. Es weist jedes Kettenglied 23 zwei Paare von Führungsrollen 22 auf, die auf den Rundstangen 19 laufen, wobei die bogenäußeren Führungsrollen 22 an einem Doppelhebel 25 gelagert sind, der seinerseits schwenkbar am Kettenglied 23 gelagert ist. Die bogeninneren Führungsrollen 22 jedoch sind direkt am Kettenglied 23 gelagert und damit nicht schwenkbar. Diese Führungsrollen 22 übernehmen die Führung der Rollenkette 12 im Bereich der beiden Umlenkungen 3, 4 des Schlittens 2. Die Kettenglieder 23 sind durch Kalottenlager 24 raumgängig miteinander verbunden.

Ferner ist an jedem Kettenglied 23 eine Sperrklinke 26 schwenkbar gelagert, die durch eine Drehfeder 27 vorgespannt ist. Die Schwenkachse der Sperrklinke 26 liegt parallel zur Schwenkachse des Doppelhebels 25; die Drehfeder 27 wirkt im Uhrzeigersinn. Die Sperrklinke 26 wirkt mit einem Querstift 28 zusammen, der parallel zur Drehachse am Doppelhebel 25 beidseitig abstehend befestigt ist. Ist der Querstift 28 in Eingriff mit der Sperrklinke 26, so wird der Doppelhebel 25, zusammen mit dem als Anschlag wirkenden Kettenglied 23 gegen Drehung gesichert und seine beiden Führungsrollen 22 sind in Eingriff mit den Rundstangen 19. Diese Position, bei der der Doppelhebel 25 im wesentlichen senkrecht zu den Rundstangen 19 steht, wird nur beim Durchlaufen der ersten Umlenkung 3 und der zweiten Umlenkung 4 im Bereich des Schlittens 2 unterbrochen.

Zu diesem Zweck ist an der Sperrklinke 26 ein Steuerdaumen 29 vorgesehen, der mit einer Rampe 30 am Schlitten 2 zusammenwirkt. Trifft der Steuerdaumen 29 auf diese Rampe 30 auf, so wird die Sperrklinke 26 entgegen der Kraft der Drehfeder 27 verschwenkt, gerät dadurch außer Eingriff mit dem Querstift 28 und gibt so den Doppelhebel 25 frei. Dessen Position wird nunmehr im Bereich des Schlittens 2 durch eine an diesem befestigte bogenförmige Nutkurve 31 definiert die die Querstifte 28 aufnimmt. Diese ist so gestaltet, dass der Doppelhebel 25 unmittelbar vor dem Eintreffen an der Umlenkung 3 bzw. 4 ausreichend weit verschwenkt wird, dass seine beiden Führungsrollen 22 zwischen den Rundstangen 19 hindurchtreten können (Position X in Fig. 2). Umgekehrt wird unmittelbar nach dem Verlassen der Umlenkungen 3, 4 der Doppelhebel 25, nachdem er zwischen den beiden Rundstangen 19 hindurchbewegt worden ist, zurück in seine Normalposition verschwenkt, in der seine beiden Führungsrollen 22 wieder "von außen" an den Rundstangen 19 angreifen, wonach die Sperrklinke 26 selbsttätig am Querstift 28 einschnappt.

Der Schlitten 2 nach Fig. 2 ist mittels mehrerer Laufrollen 35 auf den insgesamt vier Rundstangen 19 der äußeren Führungsschiene 13 und der inneren Führungsschiene 14 beweglich geführt. Er weist neben der bereits beschriebenen Rampe 30 zur Steuerung der Sperrklinken 26 und der Nutkurve 31 zur Steuerung der Doppelhebel 25 zwei die erste und zweite Umlenkung 3, 4 definierende Führungsbögen 32 auf, die mit den unbeweglich an den Kettengliedern 23 gelagerten Führungsrollen 22 zusammenwirken und so die Rollenkette 12 ausschließlich mittels Rollreibung umlenken. Die Führungsbögen 32 greifen an den einander zuweisenden Seiten der Führungsrollen 22 an, während die voneinander wegweisenden Seiten der Führungsrollen 22 mit den Rundstangen 19 zusammenwirken. Es ist somit ein überlappender bzw. stoßfreier Übergang der Führungsrollen 22 von den Rundstangen 19 zu den Führungsbögen 32 und umgekehrt möglich.

Jedes Kettenglied 23 weist ferner einen quer zur Laufrichtung angeordneten, beidseitig überstehenden Lagerbolzen 33 auf. Auf diesem ist das Kalottenlager 24 befestigt und der Doppelhebel 25 schwenkbar gelagert. Die überstehenden Enden der Lagerbolzen 33 kämmen mit den Zahnrädern 10, 11 der Antriebsstationen 6, 7.

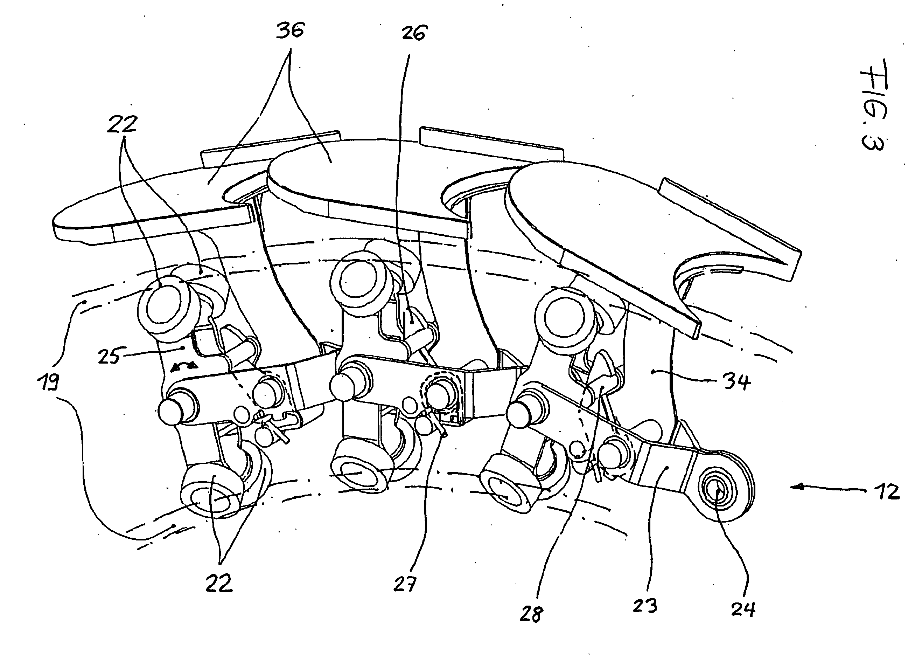

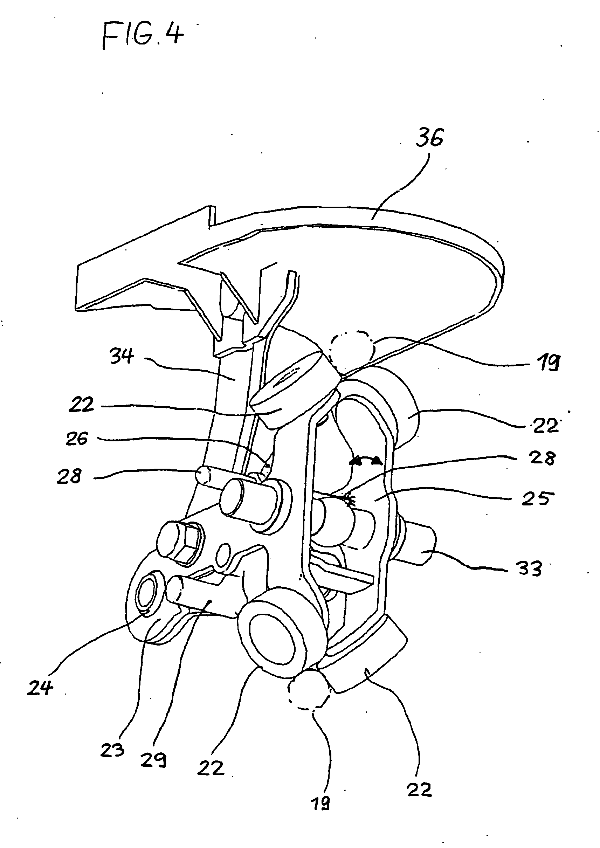

Die Kettenglieder 23 nach Figur 3 und 4 sind im Gegensatz zu den Kettengliedern 23 nach Figur 1 und 2 über Stege 34 mit Tragplatten 36 versehen, auf denen Gegenstände G abgestellt werden können. Auf diese Weise können beispielsweise auch weiche Kartonverpackungen transportiert und gespeichert werden.

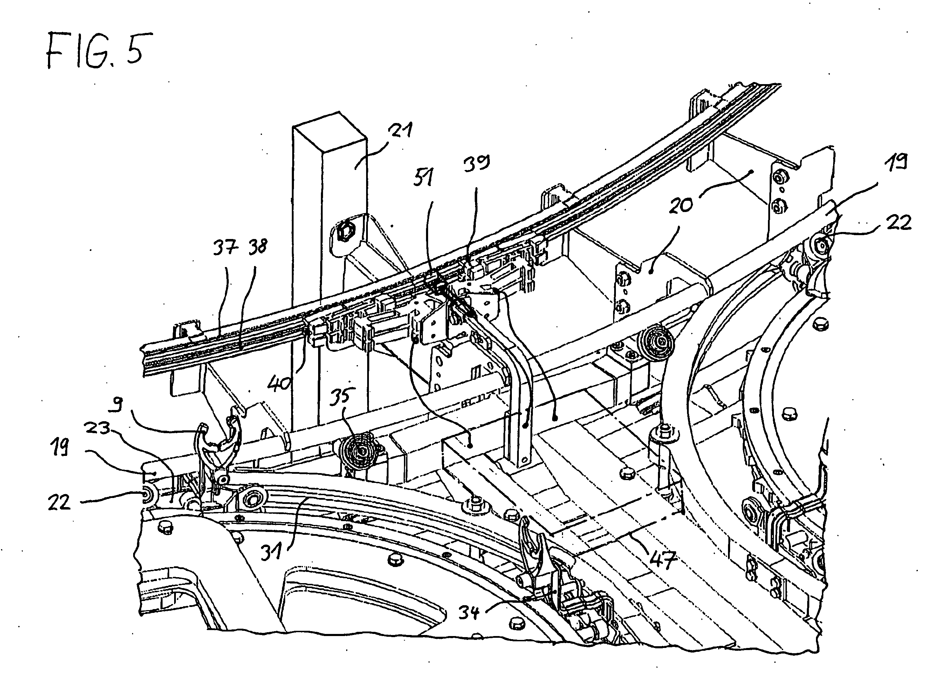

Wie die Figur 5 zeigt, sind im Bereich der Wendel W konzentrisch zur inneren Führungsschiene 14 bzw. zur inneren Förderbahn F1 zwei Stromschienen 37, 38 stationär am Gestell 21 befestigt. Mit jeder Stromschiene 37, 38 wirken am Schlitten 2 befestigte Stromabnehmer 39, 40 zusammen, die federnd an den Stromschienen 37, 38 anliegen und mehrere auf dem Schlitten 2 angeordnete Kontrollorgane mit Strom versorgen.

Die Kontrollorgane werden u. a. durch vier Sensorgruppen 41 bis 44 gebildet, die jeweils im Einlaufbereich und Auslaufbereich der Umlenkung 3 und der Umlenkung 4 am Schlitten 2 befestigt ist. Jede Sensorgruppe 41 bis 44 umfasste eine Grundplatte 45, die im Wesentlichen senkrecht bzw. äquidistant zu den beiden benachbarten Rundstangen 19 ausgerichtet ist. In jeder Grundplatte 45 sind jeweils drei berührungslos arbeitende Sensoren 46 befestigt, beispielsweise induktive oder kapazitive Geber. Die drei Sensoren 46 jeder Grundplatte 45 sind derart angeordnet, dass sie gleichzeitig ein Signal geben, wenn der Lagerbolzen 33, der Querstift 28 und der Steuerdaumen 29 eines passierenden Kettenglieds 23 die in Fig. 4 gezeigte Relativposition einnehmen. In dieser Relativposition ist der Doppelhebel 25 in seiner im Wesentlichen senkrechten Position verriegelt, wobei seine beiden Führungsrollen 22 von außen an den Rundstangen 19 angreifen. Dies ist die gewünschte funktionsnotwendige Position dieser Elemente an den Stellen, an denen die vier Sensorgruppen 41 bis 44 angeordnet sind.

Liegt diese gewünschte Position nicht vor, z.B., weil ein Steuerdaumen 29 abgebrochen ist oder der Doppelhebel 25 seine nicht verriegelte, ungesicherte Schrägstellung einnimmt, so werden die Signale der drei Sensoren 46 einer Sensorgruppe 41 bis 44 nicht gleichzeitig sondern zeitlich verzögert generiert oder es fehlt ein Signal vollkommen. Diese Signalfolge wird vorzugsweise bereits in einer auf dem Schlitten 2 befestigten Auswertungseinrichtung 47 verarbeitet und löst ein Fehlersignal aus, das über die Stromabnehmer 39, 40 auf die Stromschienen 37, 38 aufmoduliert wird.

Die Auswertungseinrichtung 47 ist mit den Sensoren 46 jedes Kontrollorgans 41 bis 44 über nicht gezeigte Leitungen verbunden. An die Auswertungseinrichtung 47 können in gleicher Weise weitere Kontrollorgane, z.B. ein Drucksensor 48, der die Zugspannung der Rollenkette 12 aufnimmt, ein Positionssensor 49, der den Transfer und die Lage der Gegenstände G überwacht, und Kameras 50 zur Kontrolle des Zustands der Führungsschienen 13, 14 angeschlossen werden. Auch ein Codeleser 51, der zusammen mit stationären Markierungen im Bereich der Stromschienen 37, 38 zusammenwirkt, und so die genaue Position des Schlittens 2 definiert, kann angeschlossen werden, genauso wie nicht gezeigte Beleuchtungseinrichtungen, z. B. für die Gegenstände, die der entfernt stehenden Bedienungsperson die Kontrolle erleichtern.

Zur Weiterleitung der aufmodulierten Signale der Auswertungseinrichtung 47 sind die beiden Stromschienen 37, 38 über Leitungen mit einer stationären, an gut zugänglicher und gut sichtbarer Stelle angeordneten Steuerkonsole 52 verbunden. Diese ist mit entsprechenden Auswertungs-, Anzeige-, Steuer- und Alarmeinrichtungen ausgestattet und außerdem über Kontrollleitungen mit den Motoren M der Antriebsstationen 7, 8 und ggf. mit der vor- und der nachgeschalteten Maschine verbunden.

Nimmt die Steuerkonsole 52 ein von der Auswertungseinrichtung 47 gesendetes "Fehlersignal" auf, so sind verschiedene Reaktionen, je nach Bedeutung der von einem Kontrollorgan erfassten Beschädigung oder Fehlfunktion möglich, angefangen von einer Anzeige in einem Display über ein optisches und/oder akustisches Warnsignal bis hin zu einem automatischem Abschalten der Motoren M. Die Gefahr von schwerwiegenden Folgeschäden und längeren Betriebsstörungen wird dadurch zuverlässig verhindert.

Die im Vorstehenden hinsichtlich einer Anordnung auf dem verfahrbaren Schlitten 2 beschriebenen Kontrollorgane können alternativ oder zusätzlich auch stationär angeordnet werden. Beispielsweise sind in Figur 2 zwei Sensorgruppen 53, 54 strichpunktiert angedeutet, die in gleicher Weise wie die Sensorgruppen 41 bis 44 die Kettenglieder 23 überwachen und über Leitungen direkt mit der Steuerkonsole 52 verbunden sind. Auch ist es möglich, ein Kontrollorgan direkt an einem Kettenglied 23 anzuordnen. Dieses könnte z.B. den Zustand der Rundstangen 19 überwachen oder Belastungswerte speichern. Auch bei Speichervorrichtungen, bei denen jede Förderbahn ein eigenes Fördermittel aufweist, ist die erfindungsgemäße Überwachung durch funktionale Kontrollorgane von Vorteil.

## Patentansprüche

1. Vorrichtung (V1) zum Speichern von Gegenständen (G) mit zwei gegenläufig antreibbaren Förderbahnen (F1, F2) und einer entlang dieser verfahrbaren Transfereinrichtung (2) zum Überführen der Gegenstände zwischen den beiden Förderbahnen, mit mindestens einem die Vorrichtung (V1) überwachenden funktionalen Kontrollorgan (41 bis 51; 53, 54), **dadurch gekennzeichnet, dass** das mindestens eine Kontrollorgan (41 bis 51) entlang der Förderbahnen (F1, F2) verfahrbar angeordnet ist, wobei das mindestens eine Kontrollorgan (41 bis 51) auf der Transfereinrichtung (2) angeordnet ist.

2. Vorrichtung nach Anspruch 1, **dadurch gekennzeichnet, dass** mindestens ein Kontrollorgan (41 bis 51, 53, 54) mit einer stationären Kontrollstation (52) verbunden ist.

3. Vorrichtung nach Anspruch 2, **dadurch gekennzeichnet, dass** mindestens ein Kontrollorgan (41 bis 51) drahtlos, z.B. über Funk, mit der Kontrollstation (52) verbunden ist.

4. Vorrichtung nach Anspruch 2, **dadurch gekennzeichnet, dass** mindestens ein Kontrollorgan (41 bis 51) über stationäre Stromschienen (37, 38) und diese abgreifende Stromabnehmer (39, 40) beweglich mit der Kontrollstation (52) verbunden ist.

5. Vorrichtung nach einem der Ansprüche 1 bis 4, **dadurch gekennzeichnet, dass** mindestens ein Kontrollorgan (41 bis 44, 53, 54) die Relativposition und/oder das Vorhandensein bestimmter Elemente (33, 28, 29) eines Kettenglieds (23) überwacht.

6. Vorrichtung nach Anspruch 5, **dadurch gekennzeichnet, dass** das Kontrollorgan (41 bis 44, 53, 54) eine Grundplatte (45) mit mehreren daran in vorgegebener Position befestigten Sensoren (46) aufweist.

7. Vorrichtung nach einem der Ansprüche 1 bis 4, **dadurch gekennzeichnet, dass** mindestens ein Kontrollorgan (48) die Zugspannung eines flexiblen Fördermittels (1, 12) überwacht.

8. Vorrichtung nach einem der Ansprüche 1 bis 4, **dadurch gekennzeichnet, dass** mindestens ein Kontrollorgan (50) den Zustand von Führungsschienen (13, 14) für eine Rollenkette (12) überwacht.

9. Vorrichtung nach einem der Ansprüche 1 bis 4, **dadurch gekennzeichnet, dass** mindestens ein Kontrollorgan (49) die Bewegung und/oder Position der Gegenstände (G) im Bereich der Transfereinrichtung (2) überwacht.

10. Vorrichtung nach einem der Ansprüche 1 bis 4, **dadurch gekennzeichnet, dass** mindestens ein Kontrollorgan (51) die Position der Transfereinrichtung (2) bezüglich der Förderbahnen (F1, F2) überwacht.

## Claims

1. Device (V1) for storing articles (G) comprising two conveyor tracks (F1, F2) which can be driven in opposite directions and a transfer means (2) which can be moved along said conveyor tracks and is to transfer the articles between the two conveyor tracks, having at least one functional control member (41 to 51; 53, 54) monitoring the device (V1), **characterised in that** the at least one control member (41 to 51) is arranged such that it can move along the conveyor tracks (F1, F2), the at least one control member (41 to 51) being arranged on the transfer means (2).

2. Device according to claim 1, **characterised in that** at least one control member (41 to 51; 53, 54) is connected to a stationary control station (52).

3. Device according to claim 2, **characterised in that** at least one control member (41 to 51) is connected to the control station (52) wirelessly, for example by radio.

4. Device according to claim 2, **characterised in that** at least one control member (41 to 51) is movably connected to the control station (52) by stationary conductor rails (37, 38) and by current collectors (39, 40) tapping said conductor rails (37, 38).

5. Device according to any one of claims 1 to 4, **characterised in that** at least one control member (41 to 44, 53, 54) monitors the relative position and/or the presence of specific elements (33, 28, 29) of a chain link (23).

6. Device according to claim 5, **characterised in that** the control member (41 to 44, 53, 54) comprises a base plate (45) with a plurality of sensors (46) attached thereto in predetermined positions.

7. Device according to any one of claims 1 to 4, **characterised in that** at least one control member (48) monitors the tensile stress of a flexible conveying means (1, 12).

8. Device according to any one of claims 1 to 4, **characterised in that** at least one control member (50) monitors the state of guide rails (13, 14) for a roller chain (12).

9. Device according to any one of claims 1 to 4, **characterised in that** at least one control member (49) monitors the movement and/or position of the articles (G) in the region of the transfer means (2).

10. Device according to any one of claims 1 to 4, **characterised in that** at least one control member (51) monitors the position of the transfer means (2) relative to the conveyor tracks (F1, F2).

## Revendications

1. Dispositif (V1) pour accumuler des objets (G), avec des voies de transport (F1, F2) aptes à être entraînées en sens inverse et un dispositif de transfert (2), mobile le long de celles-ci, pour le transfert des objets entre les deux voies de transport, avec au moins un organe de contrôle fonctionnel (41 à 51 ; 53, 54) qui surveille le dispositif (V1), **caractérisé en ce que** le ou les organes de contrôle (41 à 51) sont disposés mobiles le long des voies de transport (F1, F2), étant précisé que le ou les organes de contrôle (41 à 51) sont disposés sur le dispositif de transfert (2).

2. Dispositif selon la revendication 1, **caractérisé en ce qu'**au moins un organe de contrôle (41 à 51, 53, 54) est relié à une station de contrôle stationnaire (52).

3. Dispositif selon la revendication 2, **caractérisé en ce qu'**au moins un organe de contrôle (41 à 51) est relié à la station de contrôle (52) sans fil, par exemple par radio.

4. Dispositif selon la revendication 2, **caractérisé en ce qu'**au moins un organe de contrôle (41 à 51) est relié mobile à la station de contrôle (52) par des rails conducteurs stationnaires (37, 38) et par des collecteurs de courant (39, 40) qui captent le courant sur ceux-ci.

5. Dispositif selon l'une des revendications 1 à 4, **caractérisé en ce qu'**au moins un organe de contrôle (41 à 44, 53, 54) surveille la position relative et/ou la présence d'éléments définis (33, 28, 29) d'un chaînon (23).

6. Dispositif selon la revendication 5, **caractérisé en ce que** l'organe de contrôle (41 à 44, 53, 54) comporte une plaque de base (45) avec plusieurs capteurs (46) fixés à celle-ci dans une position prédéfinie.

7. Dispositif selon l'une des revendications 1 à 4, **caractérisé en ce qu'**au moins un organe de contrôle (48) surveille la tension de traction d'un convoyeur flexible (1, 12).

8. Dispositif selon l'une des revendications 1 à 4, **caractérisé en ce qu'**au moins un organe de contrôle (50) surveille l'état de rails de guidage (13, 14) pour une chaîne à rouleaux (12).

9. Dispositif selon l'une des revendications 1 à 4, **caractérisé en ce qu'**au moins un organe de contrôle (49) surveille le déplacement et/ou la position des objets (G) dans la zone du dispositif de transfert (2).

10. Dispositif selon l'une des revendications 1 à 4, **caractérisé en ce qu'**au moins un organe de contrôle (51) surveille la position du dispositif de transfert (2) par rapport aux voies de transport (F1, F2).
